# FASCICULE DE BREVET EUROPEEN

(11) **EP 2 062 268 B1**
(45) Date de publication et mention de la délivrance du brevet: **09.12.2009**
(21) Numéro de dépôt: 07803474.1
(22) Date de dépôt: 13.09.2007
(51) Int. Cl.: H01B 3/30, H01B 17/14, H02G 5/06

(54) **SUPPORT ISOLANT POUR DISPOSITIF HAUTE- OU MOYENNE- TENSION ET DISPOSITIF LE COMPRENANT**
ISOLATIONSHALTERUNG FÜR EINE HOCHSPANNUNGS- ODER MITTELSPANNUNGSANORDNUNG UND ANORDNUNG DAMIT
INSULATING SUPPORT FOR A HIGH-VOLTAGE OR MEDIUM-VOLTAGE DEVICE, AND DEVICE COMPRISING IT

(30) Priorité: 14.09.2006 FR 0653736
(43) Date de publication de la demande: 27.05.2009
(73) Titulaire: AREVA T&D SAS, 92084 Paris La Défense Cedex (FR)
(72) Inventeur: KIEFFEL, Yannick, F-38440 Saint-Jean-De-Bournay (FR); GIRODET, Alain, F-69680 Chassieu (FR); PONCHON, Philippe, F-69006 Lyon (FR)
(74) Mandataire: Ilgart, Jean-Christophe
(86) Numéro de dépôt international: PCT/EP2007/059662
(87) Numéro de publication internationale: WO 2008/031872

(56) Documents cités:
- DE-A1- 4 007 337
- DE-A1- 10 128 842

## Description

### DOMAINE TECHNIQUE

L'invention a trait au domaine des supports isolants utilisés notamment dans l'appareillage électrique moyenne- ou haute-tension sous enveloppe métallique.

Ces dispositifs peuvent être notamment des transformateurs d'alimentation, des transformateurs de mesure, des disjoncteurs, des sectionneurs et également des barres omnibus (intitulé également jeux de barres).

### ÉTAT DE LA TECHNIQUE ANTÉRIEURE

Les dispositifs de haute- ou moyenne-tension présentent généralement un ou plusieurs éléments conducteurs internes, au niveau desquels est appliquée la haute- ou moyenne-tension, et une enveloppe destinée à isoler le ou les éléments conducteurs de l'extérieur et reliée à la terre. Les éléments conducteurs sont séparés de l'enveloppe par le biais de supports isolants disposés régulièrement sur le pourtour des éléments conducteurs. L'espace vacant entre l'enveloppe, le ou les éléments conducteurs internes et le ou les supports isolants est occupé par un gaz diélectrique tel que SF₆ ou un mélange composé de différents gaz diélectriques.

Comme leur nom l'indique, les supports isolants sont destinés à relier les éléments conducteurs internes à l'enveloppe, de façon à ce qu'ils restent fixes dans le dispositif. Ils doivent être constitués majoritairement d'un matériau isolant pour supporter la différence de potentiel électrique entre le(les) élément(s) conducteur(s) et l'enveloppe, afin d'éviter les phénomènes de claquage électrique. Au niveau des points triples (dénommés également « triple jonction »), à savoir à la jonction du support isolant, de l'élément conducteur et/ou l'enveloppe et de l'atmosphère chargée en gaz diélectrique, il se produit couramment un renforcement du champ électrique, qui peut occasionner, à l'usage, et en particulier en présence de particules conductrices métalliques l'apparition de décharges partielles et, par voie de conséquence, une dégradation du dispositif à moyenne-ou à haute-tension par cheminement et érosion électrique pouvant conduire à la diminution de la qualité d'isolement du support, voire dans des cas extrêmes, au claquage disruptif de la pièce isolante.

Pour pallier ces inconvénients, plusieurs solutions ont été proposées basées principalement sur l'ajout d'inserts métalliques, afin de modifier et diminuer le champ électrique au voisinage du point triple. Egalement, certains auteurs ont travaillé sur la structure du matériau destiné à constituer le support isolant.

Par exemple, US 3,610,947 décrit un support isolant comprenant un insert métallique massique, afin de contrôler le champ électrique au niveau du point triple. Néanmoins, après une exposition répétée à des cycles de température (différences de température répétées), ce type de support a tendance à subir une dilatation différentielle entre le support et l'insert en raison de la différence de matériaux entre le support isolant et l'insert métallique, pouvant générer une délamination ou décohésion de l'insert métallique par rapport au support isolant du côté de l'élément conducteur interne et/ou de l'enveloppe. Ce type de décohésion peut conduire à l'apparition de décharges partielles à l'interface (insert métallique/support isolant).

Il a été proposé, également, d'inclure dans le matériau isolant constitutif du support, en particulier à proximité de la zone de contact formant le point triple, des particules conductrices de l'électricité, plus particulièrement des particules organiques telles que du noir de carbone (décrit dans US 3,448,202) ou inorganiques telles que du dioxyde de titane (décrit dans DE 4007335). La présence de ces particules conductrices permet de diminuer la valeur du champ électrique et ainsi les dégradations résultant de l'exposition à des champs électriques élevés. Toutefois, à l'usage, les particules conductrices de l'électricité, en particulier, lorsqu'elles sont en noir de carbone, peuvent polluer l'enceinte du dispositif. Les particules peuvent également être soumises à un phénomène de déplacement et se regrouper ainsi à la surface du support isolant, pouvant provoquer une diminution de la résistance de surface et mener dans un cas ultime à un phénomène de court-circuit.

Le document DE 101 28842 décrit un support isolant pour un dispositif haute-tension qui comprend un matériau polymère conductrice.

Il a été également proposé d'adjoindre au support isolant des éléments massifs de surface ou internes.

Par exemple, US 3,801,725 décrit un support isolant sur lequel sont déposés des anneaux en métal, en résine époxy ou encore en peinture contenant, par exemple, des particules d'argent. Ce type de configuration peut engendrer soit une décohésion entre les anneaux métalliques et le support isolant, soit l'apparition de poussières conductrices de l'électricité et ainsi conduire à des courts-circuits à la surface du support isolant.

Il existe donc un véritable besoin concernant des supports isolants pour des dispositifs à haute- et à moyenne-tension permettant de diminuer le gradient de champ électrique local au niveau de la triple jonction (support isolant/élément conducteur (ou enveloppe)/gaz diélectrique) (ou point triple) sans les inconvénients inhérents aux supports isolants de l'art antérieur, à savoir :
- des phénomènes de décohésion/délamination entre les supports isolants et les inserts métalliques du côté conducteur interne et/ou les enveloppes ;
- la création de poussières conductrices pouvant s'accumuler dans l'enceinte ;
- des phénomènes d'agrégation des particules conductrices à la surface des supports isolants.

Les inventeurs ont découvert, de manière surprenante, des supports isolants présentant des zones comprenant des particules conductrices particulières permettant de surmonter les inconvénients mentionnés ci-dessus, lesdites zones permettant d'abaisser le gradient du champ électrique.

### EXPOSÉ DE L'INVENTION

Ainsi, l'invention a trait, selon un premier objet, à un support isolant pour dispositif haute- ou moyenne-tension comprenant un matériau polymère isolant, ledit support comprenant au moins à l'une de ses extrémités destinée à être en contact avec une partie conductrice de l'électricité, une zone comprenant un matériau composite, lequel matériau composite comprenant une matrice en un matériau polymère isolant identique ou différent de celui mentionné précédemment et une charge comprenant en tout ou partie une charge conductrice de l'électricité, **caractérisé en ce que** tout ou partie de ladite charge conductrice de l'électricité est une charge polymère, enrobant éventuellement une charge minérale.

Avantageusement, le taux de charge conductrice de l'électricité est supérieur au seuil de percolation électrique.

La zone mentionnée ci-dessus du fait qu'elle comprend une charge conductrice de l'électricité présente des propriétés diélectriques différentes par rapport aux parties du support ne les comprenant pas, ces propriétés diélectriques ayant pour effet de modifier les lignes de champ électrique et d'abaisser le gradient électrique à cet endroit.

De plus, la charge conductrice est, en tout ou partie, une charge polymère dispersée dans une matrice polymérique, ce qui a pour effet d'endiguer les phénomènes de décohésion du fait de la bonne compatibilité chimique des deux matériaux, de permettre d'égaler les coefficients de dilatation entre la partie conductrice du support isolant et le support isolant en tant que tel et de supprimer la création de poussières conductrices et de décharges partielles inhérente aux réalisations de l'art antérieur.

D'autres avantages et caractéristiques de l'invention apparaîtront à la lecture de la description non limitative détaillée ci-dessous, en référence aux figures annexées.

### BRÈVE DESCRIPTION DES DESSINS

La figure 1 représente une coupe transversale d'un dispositif comprenant un support isolant selon un premier mode de réalisation de l'invention.

La figure 2 représente une coupe transversale d'un dispositif comprenant un support isolant selon un second mode de réalisation de l'invention.

La figure 3 représente une coupe transversale d'un dispositif comprenant un support isolant selon une variante du second mode de réalisation de l'invention.

Des symboles de référence identiques désignant des éléments correspondants ou similaires ont été utilisés sur les différentes figures concernées.

### EXPOSÉ DÉTAILLÉ DE MODES DE RÉALISATION PARTICULIERS

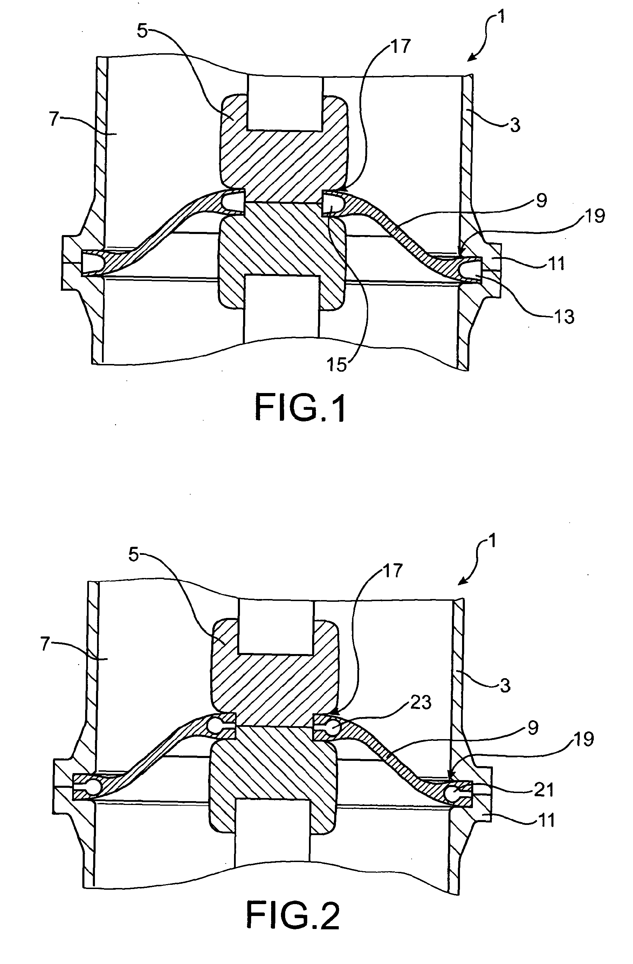

Le premier mode de réalisation va être tout d'abord décrit. Sur la figure 1 est représenté un dispositif de moyenne- ou haute-tension 1 comprenant une enveloppe métallique 3 de forme sensiblement cylindrique et une partie conductrice de l'électricité 5 se présentant sous forme d'un cylindre métallique, ladite enveloppe étant disposée de manière coaxiale par rapport à la partie conductrice, laquelle partie étant soumise lors du fonctionnement du dispositif à une haute- ou moyenne tension. Afin d'assurer l'isolement électrique du dispositif, l'espace vacant entre la partie conductrice de l'électricité 5 et l'enveloppe 3 est remplie d'une couche comprenant un gaz diélectrique 7. Selon l'invention, ce gaz diélectrique constituant cette couche peut être de l'air, de l'azote, du protoxyde d'azote, du dioxyde de carbone, CF₄, de l'hexafluorure de soufre (SF₆) ou les mélanges de ceux-ci.

Pour assurer l'ancrage de la partie conductrice de l'électricité dans l'enveloppe, il est prévu un support isolant 9 se présentant sous la forme d'un disque ou d'un cône à travers lequel passe la partie conductrice de l'électricité 5, cette partie conductrice étant fixée également à ce support, et ce disque ou cône étant ancré dans l'enveloppe par le biais d'une bride 11.

Conformément à l'invention, ce support isolant présente deux zones 13, 15 destinées à diminuer le champ électrique, ces zones se présentant sous forme d'un revêtement sur la surface externe du support, ce revêtement étant situé, selon ce mode de réalisation, respectivement :
- à la jonction support isolant-partie conductrice de l'électricité (point triple référencé 17) ; et/ou
- à la jonction support isolant-enveloppe (point triple référencé 19), étant entendu que les revêtements sont respectivement reliés électriquement à la partie conductrice de l'électricité et à l'enveloppe.

Conformément à l'invention, les zones 13, 15 destinées à diminuer le champ électrique se présentent sous la forme d'un matériau composite comprenant une matrice en un matériau polymère isolant identique ou différent de celui de la partie médiane du système isolant (à savoir la partie située entre les deux extrémités) et une charge conductrice de l'électricité, consistant en une charge polymère.

Que ce soit pour ce mode de réalisation ou d'autres modes de réalisation, le matériau polymère isolant constitutif du support isolant peut être choisi parmi les polymères thermoplastiques, les polymères thermodurcissables.

Parmi les polymères thermoplastiques, on peut citer le poly(éthylène téréphtalate) (connu sous l'abréviation PETP), un polyamide-imide (connu sous l'abréviation PAI), un polyétherimide (connu sous l'abréviation PEI), un polyamide, une polyétheréthercétone, un polyimide ou un polycarbonate.

Par polymère thermodurcissable, on entend, généralement, au sens de l'invention, un matériau résultant de la réaction d'une résine avec un durcisseur.

On peut citer comme résines susceptibles d'être utilisées, les résines époxydes bisphénol-A, les résines époxydes bisphénol-F, les résines cycloaliphatiques.

On peut citer comme durcisseur susceptible d'être utilisé des anhydrides d'acide, tels que l'anhydride phtalique (connu sous l'abréviation PA), l'acide tétrahydrophtalique (connu sous l'abréviation THPA), l'acide hexahydrophtalique (connu sous l'abréviation HHPA), l'acide méthyltétrahydrophtalique (connu sous l'abréviation MTHPA), l'anhydride méthylhexahydrophtalique (connu sous l'abréviation MHHPA), l'anhydride dodécénylsuccinique (connu sous l'abréviation DDSA), l'anhydride méthylnorbornène-2,3-dicarboxylique (connu sous l'abréviation MNA).

Selon l'invention, la matrice est constituée d'un matériau polymère isolant identique ou différent de celui mentionné ci-dessus, à savoir un matériau choisi parmi les polymères thermoplastiques ou les polymères thermodurcissables. De préférence, la matrice est constituée d'un matériau polymère isolant identique à celui du support isolant, de préférence, avec une température de transition vitreuse proche de celui-ci, un coefficient de dilation proche de celui du support isolant (par exemple de l'ordre de 30 µm/m/°K pour un support en résine époxyde chargée en alumine, ou de l'ordre de 60 µm/m/°K pour un support en polymère thermoplastique de type PETP).

Comme mentionné ci-dessus, le matériau composite comprend une charge conductrice de l'électricité du type charge polymère. La conductivité électrique résultante est généralement comprise dans la plage allant de 10⁻⁴ à 10⁺⁴ S.cm⁻¹.

Cette charge polymère, que ce soit pour le mode de réalisation mentionné ci-dessus ou pour d'autres modes, peut se présenter sous la forme d'un système organique conjugué comprenant l'association d'un polymère conducteur intrinsèque et d'un dopant.

On peut citer comme polymère conducteur intrinsèque des polymères hétérocycliques tels que des polyanilines, des polypyrroles.

On peut citer comme dopants de polymère conducteur intrinsèque l'acide camphre sulfonique, des diesters d'acide sulfosuccinique, des diesters d'acide sulfophtalique.

Des systèmes conjugués polymère conducteur intrinsèques/dopant particuliers peuvent être choisis parmi les systèmes suivants :
- polyaniline/acide camphre sulfonique ;
- polyaniline/diesters d'acide sulfosuccinique ;
- polyaniline/diesters d'acide sulfophtalique ;
- polypyrrole/diesters d'acide sulfophtalique.

Le taux de la charge polymère conductrice de l'électricité dans le matériau composite peut être compris dans une plage allant de 0,1 à 10%, de préférence de 1 à 5% en poids par rapport au poids total du matériau composite.

D'un point de vue pratique, le matériau composite peut être réalisé par incorporation dans la matrice de la charge polymère conductrice de l'électricité en voie solution. Cette charge polymère conductrice de l'électricité peut se présenter notamment sous la forme d'une poudre minérale, telle que du talc, de l'alumine, de la silice, enrobée d'un polymère conducteur intrinsèque dopé (systèmes tels que ceux définis ci-dessus). Cette alternative permet notamment de diminuer la quantité de polymère conducteur utilisée.

En plus de la charge polymère conductrice de l'électricité, il peut être prévu un mélange d'une charge polymère conductrice avec d'autres charges conductrices, en particulier d'au moins une charge métallique pouvant consister, par exemple, en une poudre d'un métal conducteur de l'électricité tel que l'argent et/ou des particules de noir de carbone. Enfin, il peut être prévu également des charges destinées à renforcer le matériau composite, telles que des charges minérales, comme le talc, la silice ou l'alumine, ces charges minérales étant généralement enrobées par la charge polymère. La présence de charges minérales dans le matériau composite permet notamment de diminuer le coefficient de dilatation du matériau composite et d'égaler le coefficient de dilatation du matériau du support.

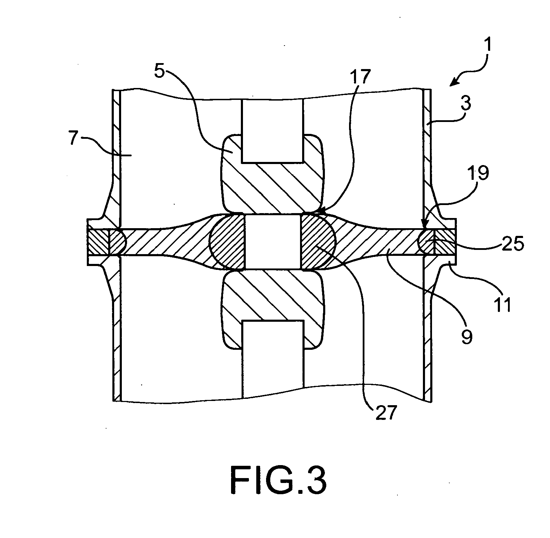

Selon un second mode de réalisation, les zones destinées à diminuer le champ électrique peuvent se présenter sous forme d'une cavité usinée à l'intérieur du matériau isolant constituant le support isolant, ladite cavité étant :
- soit revêtue d'une couche de matériau composite tel que défini ci-dessus (références 21, 23 sur la figure 2) ;
- soit remplie du matériau composite tel que défini ci-dessus (auquel cas, lesdites zones forment un insert dans le support) (références 25, 27 sur la figure 3) ; la cavité étant, selon ce mode de réalisation, pratiquée à proximité de la zone des points triples (références 17 et 19 sur les figures 2 et 3).

Lorsque les zones forment un insert, le système isolant peut être réalisé également par surmoulage du matériau polymère isolant constitutif du système sur l'insert.

Les supports isolants décrits ci-dessus sont destinés à entrer dans la constitution de dispositifs de moyenne- ou haute-tension.

L'invention a ainsi trait également à un dispositif de haute- ou moyenne-tension comprenant une partie conductrice de l'électricité, une enveloppe entourant ladite partie conductrice de l'électricité et un support isolant tel que défini ci-dessus reliant par ses extrémités la partie conductrice de l'électricité à l'enveloppe.

Quel que soit le mode de réalisation, lesdites zones peuvent présenter une teneur en charge polymère conducteur croissante en direction de l'extrémité du support.

L'invention va maintenant être décrite par rapport aux exemples suivants annexés, donnés à titre illustratif et non limitatif.

### EXEMPLE 1

Cet exemple illustre la préparation d'un matériau composite destiné à entrer dans la constitution des zones de protection des points triples des supports isolants de l'invention.

Ce matériau composite est réalisé à partir des ingrédients suivants :
- une résine époxyde liquide à base de bisphénol-A « Araldite CY 228 » commercialisée par Huntsman (100 parties en poids) ;
- un durcisseur anhydride liquide « Aradur HY 918 » commercialisé par Huntsman (85 parties en poids) ;
- un activateur amine tertiaire « DY 061 » commercialisé par Huntsman (1 partie en poids) ;
- une charge polymère conductrice « Paniplast COMP TP 30 » commercialisée par Paniplast (120 parties en poids), cette charge étant une poudre de talc enrobée de polyaniline dopée par un dérivé d'acide sulfonique.

Dans un premier temps, on procède à un étuvage de la résine époxyde CY 228 et de la charge polymère conductrice Paniplast COMP TP 30 à une température de 60°C pendant 5 heures. Il est procédé parallèlement également à un étuvage du moule destiné à accueillir les ingrédients du matériau composite à une température 60°C pendant également 5 heures.

On mélange ensuite la résine CY 228 et la charge polymère conductrice Paniplast COMPT TP 30 sous vide pendant 15 minutes puis on introduit dans ledit mélange le durcisseur HY 918 et l'accélérateur DY 061, l'ensemble obtenu étant mélangé sous vide pendant 15 minutes.

On moule le mélange résultant par gravité et réticulation dans le moule étuvé pendant 8 heures à 60°C puis on procède à une étape de post-cuisson du matériau à l'extérieur du moule pendant 8 heures à une température de 80°C.

### EXEMPLE 2

Cet exemple illustre la préparation d'un matériau composite destiné à entrer dans la constitution des zones de protection des points triples des supports isolants de l'invention.

Ce matériau composite est réalisé à partir des ingrédients suivants :
- une résine époxyde bisphénol-A « Araldite CY 228 » commercialisée par Huntsman (100 parties en poids) ;
- un durcisseur anhydride liquide « Aradur HY 918 » commercialisé par Huntsman (80 parties en poids) ;
- un activateur amine tertiare « DY 061 » commercialisé par Huntsman (1 partie en poids);
- une charge polymère conductrice « Paniplast COMP TP 30 » commercialisée par Paniplast (120 parties en poids), cette charge étant une poudre de talc enrobée de polyaniline dopée par un dérivé d'acide sulfonique ;
- une charge minérale alumine « Alodur » commercialisée par Treibacher (100 parties en poids).

Dans un premier temps, on procède à un étuvage de la résine époxyde CY 228 et de la charge polymère conductrice Paniplast COMP TP 30 à une température de 60°C pendant 5 heures ainsi qu'à l'étuvage de l'alumine « Alodur » et du durcisseur HY 918 pendant également 5 heures à 60°C. Il est procédé parallèlement également à un étuvage du moule destiné à accueillir les ingrédients du matériau composite à une température 60°C pendant également 5 heures.

On procède ensuite au mélange de la résine CY 228 et de la charge polymère conductrice Paniplast COMP TP 30 dans le moule sous vide pendant 15 minutes (mélange 1) et parallèlement au mélange du durcisseur HY 918 et de l'alumine Alodur également sous vide pendant 15 minutes (mélange 2). On introduit l'accélérateur DY 061 dans le mélange (2) et on introduit le mélange résultant dans le mélange (1), l'ensemble étant mélangé sous vide pendant 15 minutes.

On moule le mélange résultant par gravité et réticulation dans le moule étuvé pendant 8 heures à 60°C puis on procède à une étape de post-cuisson du matériau à l'extérieur du moule pendant 8 heures à une température de 80°C.

## Revendications

1. Support isolant pour dispositif haute- ou moyenne-tension comprenant un matériau polymère isolant, ledit support comprenant au moins à l'une de ses extrémités destinée à être en contact avec une partie conductrice de l'électricité, une zone comprenant un matériau composite, lequel matériau composite comprenant une matrice en un matériau polymère isolant identique ou différent de celui mentionné précédemment et une charge composée en tout ou partie d'une charge conductrice de l'électricité, **caractérisé en ce que** tout ou partie de ladite charge conductrice de l'électricité est une charge polymère enrobant éventuellement une charge minérale.

2. Support isolant selon la revendication 1, dans lequel le matériau polymère isolant est choisi parmi les polymères thermoplastiques et les polymères thermodurcissables.

3. Support isolant selon la revendication 2, dans lequel le polymère thermoplastique est choisi parmi un poly(éthylène téréphtalate), un polyamide-imide, un polyétherimide, un polyamide, une polyétheréthercétone, un polyimide ou un polycarbonate.

4. Support isolant selon la revendication 2, dans lequel le polymère thermodurcissable est un polymère résultant de la réaction d'une résine avec un durcisseur.

5. Support isolant selon la revendication 4, dans lequel la résine est une résine époxyde bisphénol-A, une résine époxyde bisphénol-F ou une résine cycloaliphatique.

6. Support isolant selon la revendication 4 ou 5, dans lequel le durcisseur est un anhydride d'acide.

7. Support isolant selon la revendication 6, dans lequel l'anhydride d'acide est choisi parmi l'anhydride phtalique, l'acide tétrahydrophtalique, l'acide hexahydrophtalique, l'acide méthyltétrahydrophtalique, l'anhydride méthylhexahydrophtalique, l'anhydride dodécénylsuccinique, l'anhydride méthyl-norbornène-2,3-dicarboxylique.

8. Support isolant selon l'une quelconque des revendications précédentes, dans lequel la charge polymère est un système organique conjugué comprenant l'association d'un polymère conducteur intrinsèque et d'un dopant.

9. Support isolant selon la revendication 8, dans lequel le polymère conducteur intrinsèque est un polymère hétérocyclique.

10. Support isolant selon la revendication 9, dans lequel le polymère hétérocyclique est une polyaniline ou un polypyrrole.

11. Support isolant selon la revendication 9 ou 10, dans lequel le dopant est choisi parmi l'acide camphre sulfonique, les diesters d'acide sulfosuccinique, les diesters d'acide sulfophtalique.

12. Support isolant selon l'une quelconque des revendications précédentes, dans lequel la charge conductrice de l'électricité est un mélange d'une charge polymère conductrice de l'électricité et d'au moins une charge métallique et/ou de particules de noir de carbone.

13. Support isolant selon la revendication 12, dans lequel la charge métallique est de la poudre d'argent.

14. Support isolant selon l'une quelconque des revendications précédentes, dans lequel la charge minérale est choisie parmi le talc, l'alumine, la silice.

15. Support isolant selon l'une quelconque des revendications précédentes, dans lequel' ladite zone se présente sous la forme d'un revêtement sur la surface externe dudit support.

16. Support isolant selon l'une quelconque des revendications 1 à 14, dans lequel ladite zone se présente sous d'une revêtement interne sur une cavité ménagée dans ledit support isolant.

17. Support isolant selon l'une quelconque des revendications 1 à 14, dans lequel ladite zone se présente sous forme d'un insert dans ledit support.

18. Support isolant selon l'une quelconque des revendications 1 à 15, dans lequel ladite zone présente une teneur en charge polymère conducteur croissante en direction de l'extrémité du support.

19. Dispositif de haute- ou moyenne-tension comprenant une partie conductrice de l'électricité, une enveloppe entourant ladite partie conductrice de l'électricité et un support isolant tel que défini selon l'une quelconque des revendications 1 à 18 reliant par ses extrémités la partie conductrice de l'électricité à l'enveloppe.

## Claims

1. An insulating support for high-voltage or medium-voltage device, said insulating support including an insulating polymer material and, at least at one of its ends serving to be in contact with an electrically conductive portion, said insulating support further including a zone including a composite material made up of a matrix of an insulating polymer identical to or different from the above-mentioned material and of a filler made up in full or in part of an electrically conductive filler, said insulating support being **characterized in that** all or part of said electrically conductive filler is a polymer filler optionally coating an inorganic filler.

2. An insulating support according to claim 1, in which the insulating polymer material is chosen from among thermoplastic polymers and thermo-setting polymers.

3. An insulating support according to claim 2, in which the thermoplastic polymer is chosen from among a polyethylene terephthalate, a polyamide imide, a polyether imide, a polyamide, a polyetheretherketone, a polyimide, or a polycarbonate.

4. An insulating support according to claim 2, in which the thermo-setting polymer is a polymer resulting from a resin reacting with a setting agent.

5. An insulating support according to claim 4, in which the resin is a bisphenol-A epoxide resin, a bisphenol-F epoxide resin, or a cycloaliphatic resin.

6. An insulating support according to claim 4 or claim 5, in which the setting agent is an acid anhydride.

7. An insulating support according to claim 6, in which the acid anhydride is chosen from among phthalic anhydride, tetrahydrophthalic acid, hexahydrophthalic acid, methyltetrahydrophthalic acid, methylhexahydrophthalic anhydride, dodecenylsuccinic anhydride, and methylnorbornene-2,3-dicarboxylic anhydride.

8. An insulating support according to any preceding claim, in which the polymer filler is a combined organic system comprising an association of an intrinsic conductive polymer and of a dopant.

9. An insulating support according to claim 8, in which the intrinsic conductive polymer is a heterocyclic polymer.

10. An insulating support according to claim 9, in which the heterocyclic polymer is a polyaniline or a polypyrrole.

11. An insulating support according to claim 9 or claim 10, in which the dopant is chosen from among sulfonic camphor acid, sulfosuccinic acid diesters, and sulfophthalic acid diesters.

12. An insulating support according to any preceding claim, in which the electrically conductive filler is a mixture of at least one metal filler and/or carbon black particles.

13. An insulating support according to claim 12, in which the metal filler is silver powder.

14. An insulating support according to any preceding claim, in which the inorganic filler is chosen from talc, alumina, and silica.

15. An insulating support according to any preceding claim, in which said zone is in the form of a coating on the outside surface of said support.

16. An insulating support according to any one of claims 1 to 14, in which said zone is in the form of an internal coating on a cavity provided in said insulating support.

17. An insulating support according to any one of claims 1 to 14, in which said zone is in the form of an insert in said support.

18. An insulating support according to any one of claims 1 to 15, in which said zone has a conductive polymer filler content that increases going towards the end of the support.

19. High-voltage or medium-voltage device comprising an electrically conductive portion, cladding surrounding said electrically conductive portion, and an insulating system as defined in any one of claims 1 to 18, acting via its ends to connect the electrically conductive portion to the cladding.

## Patentansprüche

1. Isolierhalterung für eine Hoch- bzw. Mittelspannungsvorrichtung, enthaltend ein isolierendes Polymermaterial, wobei die Halterung zumindest an ihrem einen Ende, das mit einem stromleitenden Teil in Kontakt stehen soll, einen Bereich mit einem Verbundmaterial aufweist, wobei das Verbundmaterial eine Matrix aus einem gleichen oder vom vorgenannten sich unterscheidenden isolierenden Polymermaterial und einen Füllstoff aufweist, der ganz oder teilweise aus einem stromleitenden Füllstoff zusammengesetzt ist, **dadurch gekennzeichnet, dass** der gesamte stromleitende Füllstoff bzw. ein Teil davon ein Polymerfüllstoff ist, der gegebenenfalls einen mineralischen Füllstoff umhüllt.

2. Isolierhalterung nach Anspruch 1, wobei das isolierende Polymermaterial aus den thermoplastischen Polymeren und den warmaushärtenden Polymeren ausgewählt ist.

3. Isolierhalterung nach Anspruch 2, wobei das thermoplastische Polymer aus Polyethylenterephtalat, Polyamidimid, Polyetherimid, Polyamid, Polyetheretherketon, Polyimid oder Polycarbonat ausgewählt ist.

4. Isolierhalterung nach Anspruch 2, wobei das warmaushärtende Polymer ein Polymer ist, das aus der Reaktion eines Harzes mit einem Härter resultiert.

5. Isolierhalterung nach Anspruch 4, wobei das Harz Bisphenol-A-Epoxidharz, Bisphenol-F-Epoxidharz oder cyclo-aliphatisches Harz ist.

6. Isolierhalterung nach Anspruch 4 oder 5, wobei der Härter ein Säureanhydrid ist.

7. Isolierhalterung nach Anspruch 6, wobei das Säureanhydrid aus Phthalsäureanhydrid, Tetrahydrophtahalsäure, Hexahydrophthalsäure, Methyltetrahydrophthalsäure, Methylhexahydrophthal-Anhydrid, Dodecenylsuccinanhydrid, 2,3-Dicarboxyl-Methylnorbornen-Anhydrid ausgewählt ist.

8. Isolierhalterung nach einem der vorangehenden Ansprüche, wobei der Polymerfüllstoff ein konjugiertes organisches System mit der Bindung eines inhärent leitenden Polymers und eines Dotierungsstoffs ist.

9. Isolierhalterung nach Anspruch 8, wobei das inhärent leitende Polymer ein heterozyklisches Polymer ist.

10. Isolierhalterung nach Anspruch 9, wobei das heterozyklische Polymer Polyanilin oder Polypyrrol ist.

11. Isolierhalterung nach Anspruch 9 oder 10, wobei der Dotierungsstoff aus Kampfersulfonsäure, Sulfosuccin-Säure-Diestern, Sulfophthalsäure-Diestern ausgewählt ist.

12. Isolierhalterung nach einem der vorangehenden Ansprüche, wobei der stromleitende Füllstoff ein Gemisch aus einem stromleitenden Polymerfüllstoff und zumindest einem metallischen Füllstoff und/oder Russschwarzpartikeln ist.

13. Isolierhalterung nach Anspruch 12, wobei der metallische Füllstoff Silberpulver ist.

14. Isolierhalterung nach einem der vorangehenden Ansprüche, wobei der mineralische Füllstoff aus Talk, Tonerde, Kieselerde ausgewählt ist.

15. Isolierhalterung nach einem der vorangehenden Ansprüche, wobei der genannte Bereich in Form einer Beschichtung an der Außenfläche der Halterung vorliegt.

16. Isolierhalterung nach einem der Ansprüche 1 bis 14, wobei der genannte Bereich in Form einer Innenbeschichtung an einem in der Isolierhalterung ausgeführten Hohlraum vorliegt.

17. Isolierhalterung nach einem der Ansprüche 1 bis 14, wobei der genannte Bereich in Form eines Einsatzes in der Halterung vorliegt.

18. Isolierhalterung nach einem der Ansprüche 1 bis 15, wobei der genannte Bereich einen Gehalt an leitendem Polymerfüllstoff aufweist, der in Richtung des Endes der Halterung ansteigt.

19. Hoch- bzw. Mittelspannungsvorrichtung mit einem stromleitenden Teil, einem das stromleitende Teil umgebenden Mantel und einer Isolierhalterung, wie sie nach einem der Ansprüche 1 bis 18 definiert ist, die über ihre Enden das stromleitende Teil mit dem Mantel verbindet.
